# EUROPÄISCHE PATENTSCHRIFT

(11) **EP 2 328 057 B1**
(45) Veröffentlichungstag und Bekanntmachung des Hinweises auf die Patenterteilung: **16.08.2017**
(21) Anmeldenummer: 10014045.8
(22) Anmeldetag: 27.10.2010
(51) Int. Cl.: H04B 1/16, H01H 19/02, H04B 1/08, G06F 3/0484

(54) **Kommunikationsvorrichtung zur drahtlosen Kommunikation sowie Verfahren zur Einstellung von deren Parametern**
Communication device for wireless communication and method for setting parameters for same
Dispositif de communication pour la communication sans fil et procédé de réglage des paramètres de celui-ci

(30) Priorität: 26.11.2009 DE 102009055892
(43) Veröffentlichungstag der Anmeldung: 01.06.2011
(73) Patentinhaber: Rohde & Schwarz GmbH & Co. KG, 81671 München (DE)
(72) Erfinder: Storn, Rainer, 85551 Kirchheim (DE); Keles, Mustafa, 81671 München (DE)
(74) Vertreter: Beder, Jens

(56) Entgegenhaltungen:
- EP-A1- 1 619 706
- WO-A1-03/080384
- DE-A1- 2 822 672
- GB-A- 2 276 703
- US-A- 4 706 294

## Beschreibung

Die Erfindung betrifft eine Kommunikationsvorrichtung zur drahtlosen Kommunikation mit einer einfach zu produzierenden und einfach zu bedienenden Bedienvorrichtung sowie Verfahren zur Einstellung von Werten für zumindest zwei Parameter der Kommunikationsvorrichtung.

Funkgeräte müssen vor allem in zwei Größen feinstufig einstellbar sein. Die Lautstärke des Audioausgangs des Funkgeräts wird normalerweise über einen ersten Drehknopf an die individuellen Vorlieben des Benutzers angepasst. Die Helligkeit von Anzeigeelementen des Funkgeräts wird über einen zweiten Drehknopf entsprechend der Umgebungshelligkeit oder den aktuellen Erfordernissen eingestellt. Zum Beispiel ist es in manchen Anwendungsgebieten wichtig, nachts die Helligkeit der Anzeige des Funkgeräts so stark zu dimmen oder auszuschalten, dass weitere Personen das Funkgerät in der Nacht nicht erkennen können. Nachteilig an dem Stand der Technik ist es, dass sowohl für die Lautstärke als auch für die Helligkeit der Anzeige jeweils ein eigener Drehknopf verwendet wird. Je mehr Bedienknöpfe an einem Funkgerät verwendet werden, desto unübersichtlicher wird die Bedienbarkeit des Funkgeräts, desto komplexer und zeitaufwendiger wird die Montage der Bedienvorrichtung, desto mehr Material muss verwendet werden, und desto teuer wird die Produktion des Funkgeräts.

Im Bereich von kleinformatigen Rundfunkempfängern, z. B. in Autos, ist es bekannt, einen Drehschalter mit zwei Funktionen zu belegen. So offenbart z. B. die EP 0 796 766 A2 eine Multifunktionsbedieneinrichtung für ein Fahrzeug. Dabei wird der Lautstärkeregler des Autoradios gleichzeitig als Auswahlvorrichtung für die Menüführung verwendet. Die eingestellte Lautstärke oder das eingestellte Menü ist dabei auf einem Display abzulesen. Eine solche Lösung ist allerdings nicht für alle Funkgeräte geeignet, da einfach gestaltete Funkgeräte keinen Display aufweisen. Die sichtbare Erfassung der eingestellten Helligkeit und der eingestellten Lautstärke des Funkgeräts durch einen Benutzer ist aber wichtig für eine intuitive Bedienung eines Funkgeräts.

Das Dokument US 4 706 294 zeigt eine Vorrichtung zur Einstellung der Parameter eines Audio-Verstärkers. Mittels einer Bedienvorrichtung, hier einem Drehschalter, kann nach Auswahl eines mehrerer einzustellender Parameter, dieser Parameter eingestellt werden. Derweil bleiben die Werte der übrigen Parameter konstant. Nach der Einstellung eines ersten Parameters können auf gleiche Weise beliebig viele weitere Parameter eingestellt werden. Jede Drehung des Drehschalters löst dabei eine Änderung des gerade ausgewählten Parameters proportional zu der gerade ausgeführten Drehung aus.

Weiterhin zeigt das Dokument EP 1 619 706 eine Bedienvorrichtung für ein automobiles Multimediagerät. Dabei ist ein Dreh- DruckSchalter verschiebbar auf einer Oberfläche angeordnet. Durch Verschieben des Dreh- Druck-Schalters auf der Oberfläche können unterschiedliche einzustellende Parameter auf einer Bedienoberfläche ausgewählt werden. Ist auf diese Weise ein einzustellender Parameter ausgewählt, so erfolgt die Einstellung durch Drehen und Drücken des Dreh-Druck-Schalters. Die Drehung ist dabei proportional zu der Änderung des Werts des gerade einzustellenden Parameters.

Schliesslich zeigt das Dokument WO 03/080384 eine Bedieneinheit für ein Fahrerassistenzsystem. Mittels mehrerer Schalter können unterschiedliche einzustellende Parameter ausgewählt werden. Mittels eines Drehschalters kann der Wert eines gerade ausgewählten Parameters eingestellt werden. Sobald erneut ein anderer der Schalter betätigt wird, kann ein anderer der Werte mittels des Drehschalters eingestellt werden. Die Aufgabe der Erfindung ist es, die Probleme des Stands der Technik zu lösen und eine besonders einfache Bedienvorrichtung zu schaffen, welche einfach und schnell zu produzieren ist, einfach zu bedienen ist und übersichtlich ist.

Die Aufgabe wird durch die erfindungsgemäße Kommunikationsvorrichtung zur drahtlosen Kommunikation nach Anspruch 1 gelöst.

Die Aufgabe wird weiterhin durch das erfindungsgemäße Verfahren zur Bedienung einer zur drahtlosen Kommunikation geeigneten Kommunikationsvorrichtung nach Anspruch 9 gelöst.

Durch die feste Zuordnung der Position des Bedienelements zu jeweils genau einem Wert des ersten Parameters in dem ersten Modus wird erreicht, dass der Benutzer trotz der Bedienung von zwei Parametern über nur ein Bedienelement gleichzeitig im ersten Modus den aktuell eingestellten Wert des ersten Parameters über die dem Wert zugeordnete Position visuell zuzuordnen kann. Eine solche feste Zuordnung wie sie bei Bedienelementen für nur eine Funktion üblich ist, ist für einen Benutzer besonderes intuitiv, da er mit einem Blick den aktuellen Einstellwert des ersten Parameters im ersten Modus erfassen kann. Trotzdem ist es dem Benutzer möglich, in einem zweiten Modus den Wert eines zweiten Parameters zu variieren. Eine solche Kommunikationsvorrichtung kommt mit nur einem Bedienelement zur Steuerung von zwei Parametern aus. Dadurch wird eine besonders einfach zu konstruierende und trotzdem intuitive Bedienvorrichtung einer Kommunikationsvorrichtung realisiert.

Die Unteransprüche betreffen vorteilhafte Weiterbildungen der Erfindung.

Es ist besonders vorteilhaft, dass in dem zweiten Modus eine Änderung der Position des Bedienelements eine Änderung des Werts des zweiten Parameters bewirkt. Die Änderung des Werts des zweiten Parameters wird durch eine in ihrer Größe festgelegte Änderung der Position in Gegenrichtung des Bedienelements beendet. Eine Änderung in Gegenrichtung ist dabei eine Änderung der Position des Bedienelements in eine Gegenrichtung in Bezug auf die vorhergehende, die Änderung des Werts des zweiten Parameters bewirkende Positionsänderung. Alternativ wird die Änderung des Werts des zweiten Parameters durch einen Wechsel in den ersten Modus beendet. Eine solche Bedienung bewirkt, dass eine Änderung des Werts des zweiten Parameters durch eine Änderung der Position des Bedienelements in eine erste Richtung verursacht wird und in dem Normalfall durch eine Änderung der Position des Bedienelements in eine zweite zu der ersten entgegengesetzte Richtung beendet wird. Nach der Änderung des Werts des zweiten Parameters befindet sich die Position des Bedienelements wieder in ihrer Ursprungsposition. Es ist also möglich, den Wert des zweiten Parameters zu ändern, ohne bei dem Wechsel zurück von dem zweiten in den ersten Modus eine Lautstärkenänderung zu bewirken. Für den Fall, dass während der Änderung des Wertes des zweiten Parameters in den ersten Modus gewechselt wird, wird ebenfalls die Änderung des Werts des zweiten Parameters beendet, falls sich der Wert des zweiten Parameters beim Umschalten in den ersten Modus ändert, und der Wert des ersten Parameters wird an die neue Position des Bedienelements angepasst. So wird weiterhin gewährleistet, dass die Position des Bedienelements in dem ersten Modus mit dem eingestellten Wert des ersten Parameters übereinstimmt.

Es ist weiterhin vorteilhaft, dass in dem zweiten Modus die Änderung der Position des Bedienelements in eine Richtung, welche in dem ersten Modus den Wert des ersten Parameters erhöht, ebenfalls eine Erhöhung des Werts des zweiten Parameters bewirkt. Entsprechend ist es besonders vorteilhaft, dass in dem zweiten Modus die Änderung der Position des Bedienelements in eine Richtung, welche in dem ersten Modus den Wert des ersten Parameters verringert, eine Verringerung des Werts des zweiten Parameters bewirkt. Eine solche Bedienung ist besonders intuitiv.

Es ist weiterhin besonders vorteilhaft, dass in dem zweiten Modus der Wert nach der Änderung der Position streng monoton bis zu höchstens einem Maximalwert erhöht wird, oder streng monoton bis zu höchstens einem Minimalwert verringert wird bis die Änderungen des Werts des zweiten Parameters beendet wird. Durch die streng monotone Änderung des Werts des zweiten Parameters kann der Benutzer nach der Änderung der Position des Bedienelements warten bis der gewünschte Wert des zweiten Parameters erreicht ist und durch Zurückbewegen des Bedienelements in eine Gegenrichtung die Änderung des zweiten Parameters zu beenden. Dadurch wird es erst möglich, den Wert des zweiten Parameters zu ändern, ohne bei einem Wechsel in den ersten Modus die Position des Bedienelements verändert zu haben. Dabei ist es besonders vorteilhaft, den Wert des zweiten Parameters linear mit der Zeit zu verändern. Erreicht der Wert des zweiten Parameters dabei ein einstellbares Maximum oder Minimum, wird die Änderung des zweiten Parameters auch ohne Positionsänderung beendet.

Es ist weiterhin von besonderem Vorteil, wenn das Bedienelement eine Mehrzahl von Rastpositionen aufweist und jede Rastposition genau einer der einstellbaren Positionen zugeordnet ist. Ein solches Bedienelement mit diskreten Einstellwerten ist im Zusammenhang mit dieser Erfindung besonders vorteilhaft. Durch das Bewegen des Bedienelements zu der nächst höheren oder nächst niedrigeren Rastposition, kann im zweiten Modus der Wert des zweiten Parameters erhöht bzw. erniedrigt werden. Durch Zurückbewegen des Bedienelements um eine Rastposition kann diese Änderung beendet werden. Dadurch befindet sich das Bedienelement nach der Änderung des Werts des zweiten Parameters wieder in der Ursprungsposition und beim Wechsel von dem zweiten in den ersten Modus wird der Wert des ersten Parameters unverändert gelassen.

Es ist weiterhin vorteilhaft, dass das Bedienelement zwei Endpositionen aufweist, von denen aus das Bedienelement nur in jeweils eine Richtung bewegbar ist. Der minimal einstellbare Wert des ersten Parameters entspricht der ersten Endposition. Der maximal einstellbare Wert des ersten Parameters entspricht der zweiten Endposition. Sollte sich bei einem Wechsel von dem ersten in den zweiten Modus das Bedienelement in einer Endposition befinden, so ist es besonders vorteilhaft, dass eine Änderung der Position des Bedienelements zu der unmittelbar benachbarten Rastposition keine Änderung des Werts des zweiten Parameters bewirkt und erst eine darauffolgende Änderung der Position des Bedienelements um eine weitere Rastposition eine Änderung des Werts des zweiten Parameters bewirkt. Dies erlaubt es dem Benutzer, auch ausgehend von einer Endposition den Wert des zweiten Parameters in beide Richtungen zu variieren.

Eine vorteilhafte Weiterbildung der Erfindung ist es ebenfalls, das Bedienelement und die Bedienvorrichtung so vorzusehen, dass jede einstellbare Position des Bedienelements von den restlichen einstellbaren Positionen für einen Benutzer visuell unterscheidbar ist. Dies bedeutet für einen Benutzer, dass er durch einen Blick auf das Bedienelement die aktuell eingestellte Position des Bedienelements erkennen kann, und diese entweder durch Erfahrungswerte oder durch eine korrespondierende Markierung des zugeordneten Werts für den ersten Parameter den Wert des ersten Parameters erkennen kann. Bei einem Schiebeschalter ist eine solche Position implizit erkennbar, und im Falle eines Drehschalters könnten die Positionen durch eine Markierung an dem Drehschalter oder eine nicht rotationssymmetrische Form des Drehschalters unterschieden werden. Durch eine Markierung des Werts des ersten Parameters an der zu diesem Wert zugeordneten Position des Bedienelements, kann die Identifikation des eingestellten Werts des ersten Parameters im ersten Modus für den Benutzer weiter vereinfacht werden.

Es ist besonders vorteilhaft, wenn der zweite Parameter die Helligkeit einer Leuchtanzeige der Kommunikationsvorrichtung betrifft. Es sind dann beide Parametereinstellungen für den Benutzer jederzeit visuell erkennbar und die Benutzung eines Displays zur Anzeige der aktuell eingestellten Parameter wird überflüssig oder ein Display kann für weitere Funktionen verwendet werden. Der Benutzer sieht die Einstellung der Lautstärke visuell über die Position des Bedienelements und erkennt die Helligkeit einer Leuchtanzeige unmittelbar.

Im Folgenden wird ein Ausführungsbeispiel anhand der Zeichnungen beschrieben. Die Zeichnung zeigt:
- Fig. 1: ein Blockschaltbild eines Ausführungsbeispiels der erfindungsgemäßen Kommunikationsvorrichtung;
- Fig. 2A, B, C, D: ein erstes Diagramm der Positionen des ersten Drehschalters über die Zeit, der Positionen des zweiten Drehschalters, des Werts der Helligkeit einer Leuchtanzeige und des Werts der Lautstärke des Funkgeräts über die Zeit;
- Fig. 3A, B, C, D: ein zweites Verlaufsdiagramm der Zustände des ersten Drehschalters über die Zeit, der Positionen des zweiten Drehschalters, des Werts der Helligkeit der Leuchtanzeige und des Werts der Lautstärke des Funkgeräts über die Zeit;
- Fig. 4A, B, C, D: ein drittes Verlaufsdiagramm der Zustände des ersten Drehschalters über die Zeit, der Positionen des zweiten Drehschalters, des Werts der Helligkeit der Leuchtanzeige und des Werts der Lautstärke des Funkgeräts über die Zeit;
- Fig. 5A, B, C, D: ein viertes Verlaufsdiagramm der Zustände des ersten Drehschalters über die Zeit, der Positionen des zweiten Drehschalters, des Werts der Helligkeit der Leuchtanzeige und des Werts der Lautstärke des Funkgeräts über die Zeit;
- Fig. 6: ein Verfahrensdiagramm zur Erläuterung des Ablaufs des erfindungsgemäßen Verfahrens zur Bedienung der Kommunikationsvorrichtung;
- Fig. 7: ein Verfahrensdiagramm zur Erläuterung des Beendens der Änderung der Helligkeit der Leuchtanzeige; und
- Fig. 8: ein Verfahrensdiagramm zur Erläuterung der Bedienung der Kommunikationsvorrichtung im ersten Modus.

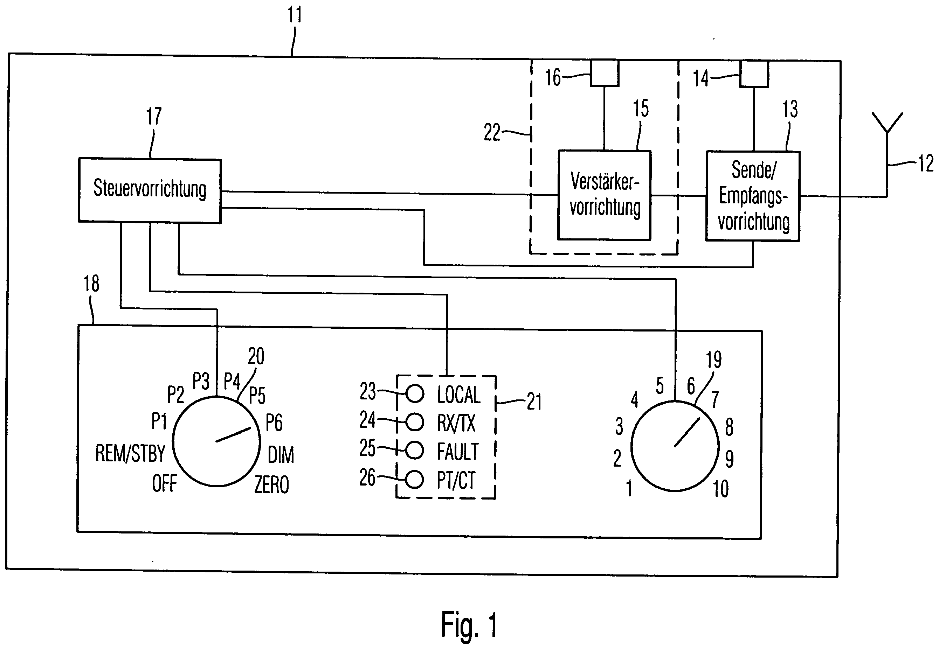

Fig. 1 zeigt ein erfindungsgemäßes Funkgerät 11 als Kommunikationsvorrichtung. Das Funkgerät 11 weist eine Antenne 12 auf, die mit einer Sende- und Empfangsvorrichtung 13 verbunden ist. In einem Sendemodus liest die Sende- und Empfangsvorrichtung 13 Sprachinformationen über ein an einem Mikrofonanschluss 14 angeschlossenes Mikrofon ein und sendet die Sprachinformationen als Sendesignal weiterverarbeitet über die Antenne 12 an weitere Funkgeräte. Zur Aktivierung eines Sendemodus wird eine Sprechtaste betätigt. Ist die Sprechtaste nicht betätigt, befindet sich die Sende- und Empfangsvorrichtung 13 in einem Empfangszustand. In dem Empfangszustand empfängt die Sende- und Empfangsvorrichtung 13 über die Antenne 12 empfangene Signale und gibt diese umgewandelt in ein Audiosignal an die Audioverstärkervorrichtung 15 weiter. Die Audioverstärkervorrichtung 15 ist mit einem Kopfhöreranschluss 16 verbunden. Die Audioverstärkervorrichtung 15 verstärkt das empfangene und umgewandelte Audiosignal und gibt das verstärkte Audiosignal an einen an dem Kopfhöreranschluss 16 angeschlossenen Kopfhörer aus. Die Audioverstärkervorrichtung 15 und der Kopfhöreranschluss 16 bilden dabei eine Audioausgabevorrichtung 22. Alternativ können natürlich ein Mikrofon und/oder ein Lautsprecher anstelle der Anschlüsse 14 und 16 direkt in dem Funkgerät 11 angeordnet sein. Die Audioausgabevorrichtung 22 kann alternativ auch ohne Audioverstärkervorrichtung 15 realisiert werden und die Lautstärke des von der ausgegebenen Sprachsignals durch andere Methode, wie verschiedene Dämpfungen und/oder Aktivlautsprecher, realisiert werden.

Das Funkgerät 11 weist weiterhin eine Steuervorrichtung 17 auf, welche sowohl mit der Audioverstärkervorrichtung 15 der Audioausgabevorrichtung 22 als auch mit der Sende- und Empfangsvorrichtung 13 verbunden ist. Die Steuervorrichtung 17 ist zur Steuerung der Verstärkung der Audioverstärkervorrichtung 15, d. h. der Lautstärke des von der Audioausgabevorrichtung 22 ausgegebenen Audiosignals geeignet. Die Steuervorrichtung 17 erkennt weiterhin bestimmte Zustände des Funkgeräts 11. So erkennt die Steuervorrichtung 17 z. B., ob sich die Sende- und Empfangsvorrichtung 13 in einem Sendemodus befindet, oder ob gerade ein Signal über die Antenne 12 an der Sende- und Empfangsvorrichtung 13 empfangen wird.

Das Funkgerät 11 weist weiterhin eine Bedienvorrichtung 18 auf, die allgemein zur Ein- und Ausgabe von Einstellwerten für Funkgeräteparameter geeignet ist. Die Bedienvorrichtung 18 ist mit der Steuervorrichtung 17 verbunden, so dass die Steuervorrichtung 17 das Funkgerät 11 auf der Basis der über die Bedienvorrichtung 18 eingegebenen Werte der Funkgeräteparameter steuern kann. Auf der anderen Seite gibt die Steuervorrichtung 17 aktuell eingestellte Werte von Funkgerätparametern an die Bedienvorrichtung 18 und gibt diese an den Benutzer aus. Die Bedienvorrichtung 18 des Ausführungsbeispiels weist als ein Bedienelement einen ersten Drehknopf 19, einen zweiten Drehknopf 20 als weiteres Bedienelement und eine Leuchtanzeige 21 auf. Die Erfindung ist nicht auf die Drehknöpfe 19 und 20 beschränkt, sondern ist auch durch Schiebeschalter oder - regler oder sonstige Bedienelemente mit einer Mehrzahl von verstellbaren Positionen realisierbar. Das Bedienelement muss dabei in einer Dimension in zwei entgegengesetzte Richtungen bewegbar sein. Dies kann eine Rotation oder eine Translation oder eine Mischung daraus sein.

Der erste Drehknopf 19 weist zehn Rastpositionen auf, in denen der Drehknopf 19 einrasten kann. Durch die Drehung des Drehknopfs kann die Position des Drehknopfs 19 in eine der zehn Rastpositionen verstellt werden. Die zehn Rastpositionen sind im Uhrzeigersinn mit relativen Positionsmarkierungen 1 bis 10 nummeriert. Diese Positionsmarkierungen werden linear auf zehn Verstärkungsfaktoren zwischen einer minimalen und einer maximal einstellbaren Verstärkung projiziert. Wird in Zusammenhang mit der vorliegenden Erfindung abkürzend beschrieben, dass die Lautstärke des Funkgeräts 11 auf die Lautstärke 1, 2, 3, 4, 5, 6, 7, 8, 9 oder 10 eingestellt wird, so wird damit tatsächlich die Audioverstärkervorrichtung 15 der Audioausgabevorrichtung 22 auf einen jeweils der Position 1 bis 10 zugeordneten Verstärkungswert eingestellt. Die Position des Drehknopfs 19 wird mittels eines radial ausgerichteten und nicht mittig angeordneten Strichs der nummerierten Rastposition zuordnenbar. Die Steuervorrichtung 17 erkennt die Drehposition des Drehknopfs 19 durch Einlesen eines entsprechenden Signals und steuert auf der Basis der Position des Drehknopfs 19 die Lautstärke der Audioausgabevorrichtung 22 als ersten Parameter in einem ersten Modus. Dazu ist die Steuervorrichtung 17 mit der Audioverstärkervorrichtung 15 verbunden. Der erste Drehknopf 19 weist dabei eine untere Endposition 1, die einer minimalen Lautstärke zugeordnet ist, und eine obere Endposition 10 auf, die einer maximalen Lautstärke zugeordnet ist. An der unteren Endposition 1 ist nur eine Drehrichtung im Uhrzeigersinn zu einer höheren Lautstärke und an der oberen Endposition 10 nur eine Drehung gegen den Uhrzeigersinn zu einer niedrigeren Lautstärke möglich.

Der zweite Drehknopf 20 ist konstruktiv genauso aufgebaut wie der erste Drehknopf 19 und ist ebenfalls mit der Steuervorrichtung 17 verbunden. Der zweite Drehknopf 20 ist ein sogenannter Modus-Schalter, der zwischen verschiedenen Funkgeräteeinstellungen und Funktionen umschaltet. Der zweite Drehknopf 20 zeigt an den zehn Rastpositionen die Markierungen "OFF", "REM/STBY", "P1", "P2", "P3", "P4", "P5", "P6" "DIM" und "ZERO". Wird der zweite Drehknopf 20 in die Rastposition, die mit "OFF" gekennzeichnet ist, gedreht, so ist das Funkgerät 11 ausgeschaltet. Wird der zweite Drehknopf 20 im Uhrzeigersinn um eine Rastposition weitergedreht, so dass der Markierungsstrich auf die Markierung "REM/STBY" zeigt, so befindet sich das Funkgerät 11 in einem "Stand-by" Modus. Die Abkürzungen "P1"-"P6" stehen für sogenannte "Pre-sets" also Voreinstellungen des Funkgeräts 11. Solche Voreinstellungen können Einstellungen zu Übertragungskanal, Frequenz, Modulation, Verschlüsselung und weitere Übertragungsparameter von Funkgeräten enthalten. Ist der zweite Drehknopf 20 auf die Position gestellt, welche mit "ZERO" gekennzeichnet ist, so können Schlüssel des Funkgeräts 11 gelöscht werden. Steht der zweite Drehknopf 20 auf der Rastposition, welche mit "DIM" bezeichnet ist, so wird die Bedienvorrichtung in einen zweiten Modus umgeschaltet. Die Steuervorrichtung 17 verwendet Änderungen der Drehposition des ersten Drehknopfs 19 nun nicht mehr zur Änderung der Lautstärke der Audioausgabevorrichtung 22, sondern zur Änderung der Helligkeit der Leuchtanzeige 21. Dazu ist die Steuervorrichtung 17 ebenfalls mit der Leuchtanzeige 21 der Bedienvorrichtung 18 zu deren Ansteuerung verbunden. Die Leuchtanzeige weist in dem dargestellten Ausführungsbeispiel vier LEDs 23 bis 26 auf, die mit den vier Funkgerätezuständen "LOCAL", "RX/TX", "FAULT", "PT/CT" bezeichnet sind. Jede Leuchtanzeige 21 gibt eine binäre "Ja", "Nein" Information an den Benutzer weiter. So gibt z. B. die zweite LED 24 von oben in leuchtendem Zustand dem Benutzer die Information, dass sich die Sende-und Empfangsvorrichtung 13 entweder in einem Sendemodus (TX) befindet oder die Sende- und Empfangsvorrichtung 13 über die Antenne 12 eine Nachricht empfängt (RX). Die Erfindung ist nicht auf eine bestimmte Anzahl von LEDs 23 bis 26 mit zugeordneten Beschriftungen beschränkt, sondern kann auch komplexere Funkgerätefunktionsausgaben, wie Bildschirme, aufweisen. Alternativ kann auch zusätzlich oder ausschließlich die Helligkeit einer Beleuchtung zur Bedienung des Funkgeräts 11 eingestellt werden. Da das erfindungsgemäße Funkgerät 11 besonders für den mobilen Einsatz geeignet sein soll, ist ein besonders robustes und einfach gestaltetes Funkgerät 11 erwünscht und eine Leuchtanzeige mit einer Mehrzahl von LEDs 23 bis 26 zur binären An-Aus-Anzeige besonders von Vorteil.

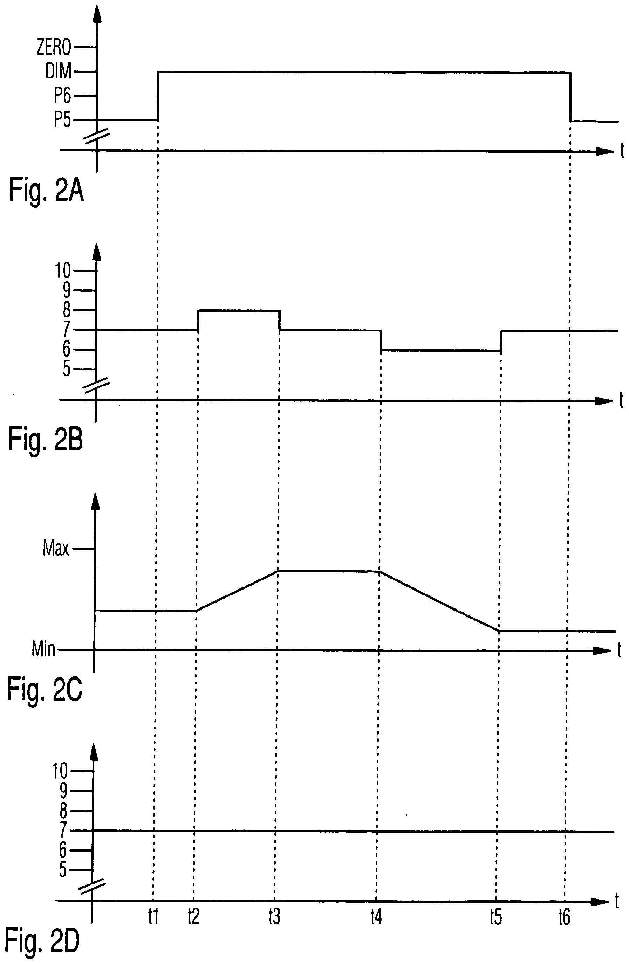

Fig. 2A, 3A, 4A und 5A zeigen jeweils die Drehposition des zweiten Drehschalters über die Zeit. Die Fig. 2B, 3B, 4B und 5B zeigen jeweils die Drehposition des ersten Drehknopfs 19 über die Zeit. Die Fig. 2C, 3C, 4C und 5C zeigen jeweils die Helligkeit der Leuchtanzeige 21 über die Zeit. Die Fig. 2D, 3D, 4D und 5D zeigen jeweils die Lautstärke der Audioausgabevorrichtung 22 des Funkgeräts 11 als den Lautstärkewerten zugeordnete Niveauwerte über die Zeit.

Die Fig. 2A bis 2D zeigen einen ersten Zeitverlauf der Drehposition der beiden Drehknöpfe 19 und 20, der Helligkeit der Leuchtanzeige 21 und der Lautstärke der Audioausgabevorrichtung 22. Zu Beginn des ersten Zeitverlaufs befindet sich das Funkgerät 11 in der Voreinstellung "P5". Zu dem Zeitpunkt t1 wird der zweite Drehknopf 20 in die Position "DIM" geschaltet. Dabei ist die Steuervorrichtung 17 so eingerichtet, dass das Funkgerät 11 trotz der Überstreichung der Voreinstellung "P6" in der Voreinstellung "P5" bleibt. Dies kann z. B. durch eine Mindestzeit realisiert werden, in der eine Drehposition eingestellt bleiben muss. Erst nach Überschreiten der Mindestzeit in einer Rastposition des zweiten Drehknopfs 20 nimmt die Steuervorrichtung 17, die entsprechende Einstellung vor. Die Steuervorrichtung 17 registriert die neue Drehposition "DIM" des zweiten Drehknopfs 20 und geht in einen zweiten Modus zur Einstellung der Helligkeit der Leuchtanzeige 21.

In dem zweiten Modus zur Einstellung der Helligkeit bleibt die Lautstärke der Audioausgabevorrichtung 22 auch bei einer Änderung der Drehposition des ersten Drehknopfs 19 unverändert bei der zuvor eingestellten Lautstärke 7. Zu einem darauf folgenden Zeitpunkt t2 wird der erste Drehknopf 19 von der Position 7 als Ausgangsposition auf die neue Position 8 gedreht. Dies bewirkt, wie in Fig. 2B zu sehen ist, keine Lautstärkeänderung, aber wie in Fig. 2C zu sehen ist, den Beginn eines linearen Anstiegs der Helligkeit der LEDs 23 bis 26 der Leuchtanzeige 21. Die Erfindung ist nicht auf einen linearen Anstieg beschränkt, vorzugsweise sollte der Anstieg jedoch streng monoton sein oder in regelmäßigen Stufen nach oben geschaltet werden. Es wäre z. B. auch denkbar, zuerst mit einem langsamen Anstieg zu beginnen und den Anstieg immer schneller werden zu lassen. Damit könnte eine grobe Einstellung der Helligkeit schnell erreicht werden und nach einem kurzen Stoppen der Änderung, eine Feineinstellung der Helligkeit vollzogen werden.

Der Benutzer kann nun solange warten bis die ansteigende Helligkeit dem Umgebungslicht oder sonstigen aktuellen Anforderungen entspricht. Zu einem Zeitpunkt t3 wird der Anstieg der Helligkeit durch das Zurückstellen des Drehknopfes 19 auf die Ausgangsposition, also eine Änderung der Position in Gegenrichtung, beendet und die Helligkeit der LEDs 23 bis 26 der Leuchtanzeige 21 bleibt auf der neu eingestellten erhöhten Helligkeitsstufe. Wird der erste Drehknopf 19 zu einem späteren Zeitpunkt t4 aus seiner Ausgangsposition um eine Raste auf die neue Position 6 gedreht, so verringert sich die Helligkeit der LEDs 23 bis 26 der Leuchtanzeige 21 erneut linear.

Der Linearitätskoeffizient wird dabei z. B. so gewählt, dass die Helligkeit der Leuchtanzeige 21 innerhalb von vier Sekunden von einer minimalen Helligkeit bis zu einer maximalen Helligkeit geändert werden kann. Die Helligkeit wird mit einem Linearitätskoeffizienten, der dem negativen Linearitätskoeffizienten bei einem Anstieg der Helligkeit entspricht, reduziert. Alternativ kann die Helligkeit schneller verringert werden als sie erhöht wird. Dies erlaubt in kritischen Situationen, vor allem nachts, ein schnelles Ausblenden der LEDs 23 bis 26 der Leuchtanzeige 21. Zusätzlich kann so in eine erste Richtung eine schnelle Helligkeitseinstellung und in eine zweite Richtung eine feine und langsame Helligkeitseinstellung realisiert werden.

Zu einem noch späteren Zeitpunkt t5 wird die Position des Drehknopfs 19 wieder durch Änderung der Position in Gegenrichtung zu der vorangegangenen Positionsänderung auf die Position 7 zurückgeschaltet und so die Änderung der Helligkeit der LEDs 23 bis 26 der Leuchtanzeige 21 beendet. Ist der Benutzer mit der neueingestellten Helligkeit der LEDs 23 bis 26 der Leuchtanzeige 21 zufrieden, stellt er dann zu einem Zeitpunkt t6 die Drehposition des zweiten Drehknopfs 20 zurück auf die verwendete und gewünschte Voreinstellung "P5". Dadurch wird die Steuervorrichtung 17 wieder so eingerichtet, dass eine Änderung der Drehposition des Drehknopfs 19 eine Änderung der Lautstärke der Audioausgabevorrichtung 22 bewirkt und die Helligkeit der LEDs 23 bis 26 der Leuchtanzeige 21 unverändert in der neu eingestellten Helligkeit verbleiben. Der Zustand der Steuervorrichtung 17, indem über den Drehknopf 19 die Lautstärke der Audioausgabevorrichtung 22 geändert wird, wird als erster Modus bezeichnet.

Während der gesamten Zeit, in der der zweite Drehknopf 20 auf der Position "DIM" steht, werden alle LEDs 23 bis 26 der Leuchtanzeige 21 eingeschaltet, damit der Benutzer die Helligkeitsänderung gut nachvollziehen kann. Dies ist vor allem im Zusammenhang mit unterschiedlichen Lichtquellen, wie z. B. unterschiedlich farbigen oder unterschiedlich hellen LEDs 23 bis 26, wichtig. Alternativ kann auch nur eine der vier LEDs 23 bis 26 angeschaltet werden, dies ist vor allem von Vorteil, wenn alle vier LEDs 23 bis 26 baugleich sind und in der gleichen Farbe und der gleichen Helligkeit abstrahlen. Hier kann z. B. getestet werden, ob bereits einer oder mehrere der vier LEDs 23 bis 26 bei einem Wechsel der Drehposition des zweiten Drehknopfs 20 auf die Position "DIM" angeschaltet ist oder sind. Dies hätte den Vorteil, dass auch in dem Modus zur Verstellung der Helligkeit, die Information über die Funktion und Zustände des Funkgeräts 11 über die Leuchtanzeige 21 ausgegeben werden können. Ist keine der vier LEDs 23 bis 26 angeschaltet, so kann eine ausgewählte LED der LEDs 23 bis 26 zur Einstellung der Helligkeit angeschaltet werden. Zur visuellen Erkennung, dass das Funkgerät 11 sich in dem zweiten Modus befindet, könnten die LEDs 23 bis 26 in einer Intervallschaltung wie bei einem Blinker betrieben werden.

Die Fig. 2 beschreibt den Fall, dass der erste Drehknopf 19 aus seiner Ausgangsposition in beide Richtungen verstellt werden kann.

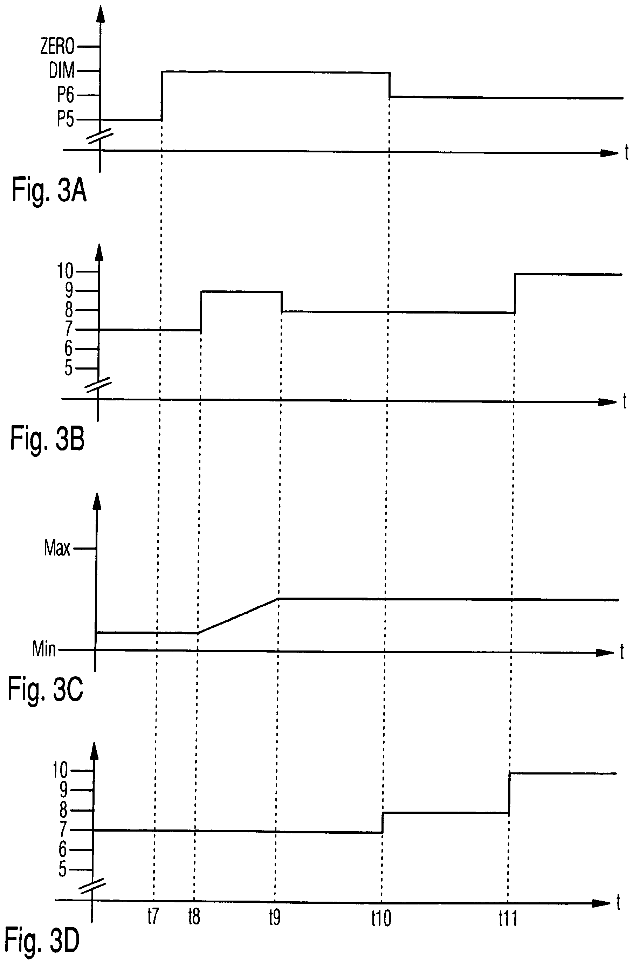

Fig. 3A bis 3D zeigen einen zweiten Verlauf der Drehposition des zweiten Drehknopfs 20, der Drehposition des ersten Drehknopfs 19, der eingestellten Helligkeit der LEDs 23 bis 26 der Leuchtanzeige 21 und der eingestellten Lautstärke der Ausgabevorrichtung 22 des Funkgeräts 11. Bis zu einem Zeitpunkt t7 steht die Drehposition des Drehknopfs 20 weiterhin auf der Voreinstellung "P5". Zum Zeitpunkt t7 wird der zweite Drehknopf 20 auf die Position "DIM" gestellt und die Steuervorrichtung 17 wechselt in den zweiten Modus zur Einstellung der Helligkeit der Leuchtanzeige 21. Zu einem Zeitpunkt t8 wird dann die Drehposition des ersten Drehknopfs 19 von 7 auf 9 um zwei Rastpositionen erhöht. Die Erhöhung der Rastposition um 1 von 7 auf 8 bewirkt den Beginn eines linearen Anstiegs der Helligkeit der Leuchtanzeige 21. Eine weitere Änderung der Drehposition des Drehknopfs 19 von 8 auf 9, hat keinen weiteren Einfluss die Änderungsrate der Helligkeit der Leuchtanzeige 21. Zu einem Zeitpunkt t9 wird der erste Drehknopf 19 von der Drehposition 9 wieder auf die Drehposition 8 als Änderung in Gegenrichtung um eine Position zurückgestellt. Durch die Änderung in Gegenrichtung um lediglich eine Rastposition wird der lineare Anstieg der Helligkeit beendet und die LEDs 23 bis 26 der Leuchtanzeigen 21 bleiben in der neu eingestellten erhöhten Helligkeit. Allgemein wird eine Änderung der Helligkeit durch eine Änderung der Drehposition des ersten Drehknopfs 19 um eine Rastposition verursacht und durch eine Änderung in eine entgegengesetzte Drehrichtung der Drehposition des ersten Drehknopfs 19 um eine Rastposition beendet. Weitere Änderungen in Richtung der die Helligkeitsänderung verursachende Drehpositionsänderung des ersten Drehknopfs 19, bevor der erste Drehknopf 9 in Gegenrichtung gedreht wird, bleiben ohne darüber hinausgehende Wirkung. Zu einem Zeitpunkt t10, zu dem der zweite Drehknopf 20 von der Position "DIM" auf die Position "P6" gestellt wird, wird die Lautstärke der Ausgabevorrichtung 22 des Funkgeräts 11 entsprechend neu eingenommenen Position des ersten Drehknopfs 19 eingestellt. Dies trägt der eineindeutigen Zuordnung von Rastpositionen zur Lautstärkeeinstellung in dem ersten Modus Rechnung. Wie in Fig. 3D zu sehen ist, bewirkt die Änderung des ersten Drehknopfs 19 um zwei Rastpositionen zum Zeitpunkt t8 eine Änderung der Lautstärke zum Zeitpunkt t10, wenn wieder in den ersten Modus zurückgewechselt wird. Die neue Lautstärke ist von der der Drehposition 7 entsprechenden Lautstärke auf die der Drehposition 8 entsprechende Lautstärke erhöht. Dadurch lässt sich in dem zweiten Modus gleichzeitig die Helligkeit der Leuchtanzeige 21 und die Lautstärke der Ausgabevorrichtung 22 des Funkgeräts 11 durch das Drehen des ersten Drehknopfs 19 um mindestens zwei Drehpositionen verringern oder erhöhen, sofern die Ausgangsposition dies zulässt. In manchen Situationen ist es z. B. sehr vorteilhaft, gleichzeitig die Helligkeit und die Lautstärke des Funkgeräts 11 stark zu reduzieren, um die Sinne des Benutzers auf das Umfeld zu konzentrieren.

Durch das Zurückschalten des zweiten Drehknopfs 20 von "DIM" auf "P6" zu dem Zeitpunkt t10 wird nicht nur die Lautstärke an die neue Drehposition des ersten Drehknopfs 19 angepasst, sondern ebenfalls das Funkgerät 11 auf die Voreinstellung "P6", die zu dem Zeitpunkt t10 über den zweiten Drehknopf 20 eingestellt wurde, an dem Funkgerät 11 eingestellt.

Die Erfindung ist nicht auf das beschriebene Ausführungsbeispiel beschränkt. Vielmehr kann in einem alternativen Ausführungsbeispiel die Änderung der Helligkeit nach einer Positionsänderung um zwei Rasten auch erst durch Zurückdrehen des ersten Drehknopfs 19 in die Ausgangsposition beendet werden. Die Ausgangsposition ist dabei die Position, in der sich der erste Drehknopf 19 befindet, wenn in den zweiten Modus gewechselt wird. Dadurch kann der Benutzer gezwungen werden, wieder in die Ausgangsposition des ersten Drehknopfs 19 zurückzukehren. Weiterhin könnte der Anstieg bzw. der Abstieg der Helligkeit der Leuchtanzeige 21 durch das Verdrehen der Drehposition des ersten Drehknopfs 19 um mehr als eine Rastposition erhöht werden. Die Anzahl der überstrichenen Rastpositionen in eine Richtung, kann dabei die Steigung der Änderung der Helligkeit festlegen.

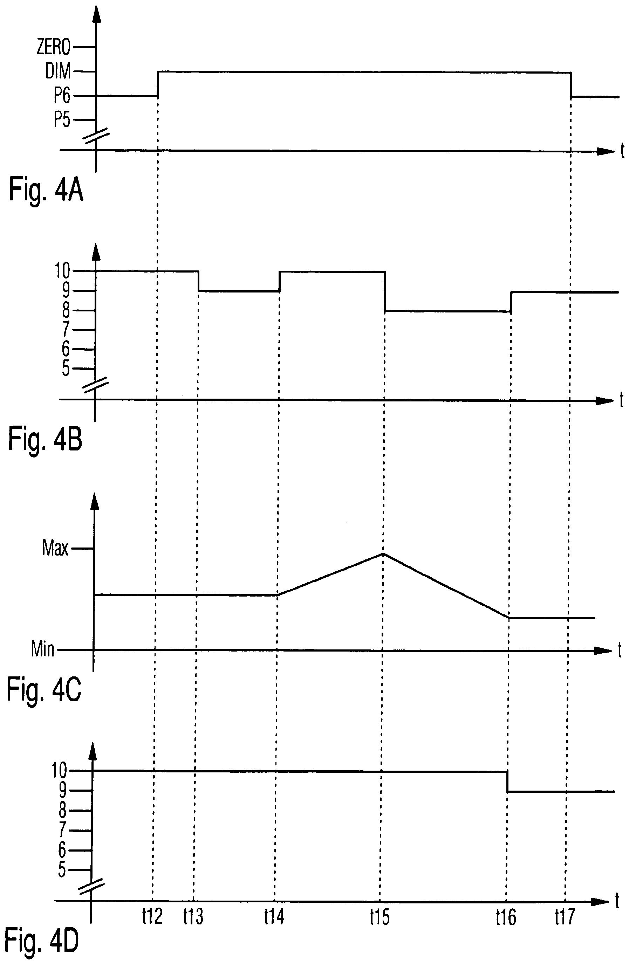

Wie in Fig. 3B zu sehen ist, wird zu dem Zeitpunkt t11, wenn die Steuervorrichtung 17 sich in dem ersten Modus befindet, der erste Drehknopf 19 von der Position 8 auf die Position 10 verdreht. Wie in Fig. 3D zu sehen ist, bewirkt dies eine Erhöhung der Lautstärke von 8 auf 10. Der erste Drehknopf 19 befindet sich nun in der Endposition 10 und in den Fig. 4A bis 4D wird mittels eines dritten Zeitverlaufs das Verfahren zur Änderung der Helligkeit der Leuchtanzeige 21 erläutert, wenn sich der erste Drehknopf 19 in einer Endposition 10 befindet.

Zu einem Zeitpunkt t12 wird der zweite Drehknopf 20 von der Position "P6" auf die Position "DIM" gedreht. Da der erste Drehknopf 19 zu diesem Zeitpunkt aus der Endposition 10 nur gegen den Uhrzeigersinn auf die Drehposition 9 zurückgedreht werden kann, wird zu einem Zeitpunkt t13 eine für die Änderung der Helligkeit der Leuchtanzeige 21 wirkungslose Änderung der Drehposition des ersten Drehknopfs 19 auf der Endposition 10 benachbarten Rastposition 9 durchgeführt. Damit wird dem Benutzer auch in der Endposition 10 ermöglicht, die Helligkeit der Leuchtanzeige 21 zu erhöhen indem er die den ersten Drehknopf 19 nach dem Zeitpunkt t13 wieder zurück auf die Drehposition 10 gedreht wird. Zu einem Zeitpunkt t14 wird die Drehposition des ersten Drehknopfs 19 von der Rastposition 9 wieder auf die Endrastposition 10 verdreht und eine Erhöhung der Helligkeit der Leuchtanzeige 21 wird gestartet. Die Helligkeit der LEDs 23 bis 26 der Leuchtanzeige 21 wird bis zu dem Zeitpunkt t15 linear erhöht bis der erste Drehknopf 19 von der Drehposition 10 auf die Drehposition 9 zurückgedreht wird. Zu einem Zeitpunkt t15 wird der erste Drehknopf 19 von der Endposition 10 direkt auf die Rastposition 8 zurückgedreht. Dadurch wird gleichzeitig der Anstieg der Helligkeit der Leuchtanzeige 21 beendet und zu dem gleichen Zeitpunkt eine Verringerung der Helligkeit der Leuchtanzeige 21 gestartet. Durch eine Änderung in Gegenrichtung zu einem Zeitpunkt t16 um eine Rastposition zu der erneuten Änderung, welche eine Verringerung der Helligkeit der Leuchtanzeige 21 verursacht, wird die Verringerung der Helligkeit der Leuchtanzeige 21 beendet. Nun befindet sich der erste Drehknopf 19 wieder in der Drehposition 9, die zu der Endposition 10 benachbart ist und die vor der Änderung der Helligkeit der Leuchtanzeige 21 eingestellt war. Zu einem Zeitpunkt t17 wird der zweite Drehknopf 20 von der Position "DIM" auf die Position "P6" zurückgestellt. Das Funkgerät 11 bleibt damit in der Voreinstellung "P6" und die Lautstärke der Audioausgabevorrichtung 22 des Funkgeräts 11 wird an die in Bezug auf die Ausgangsposition geänderte Drehposition 9 des ersten Drehknopfs 19 angepasst.

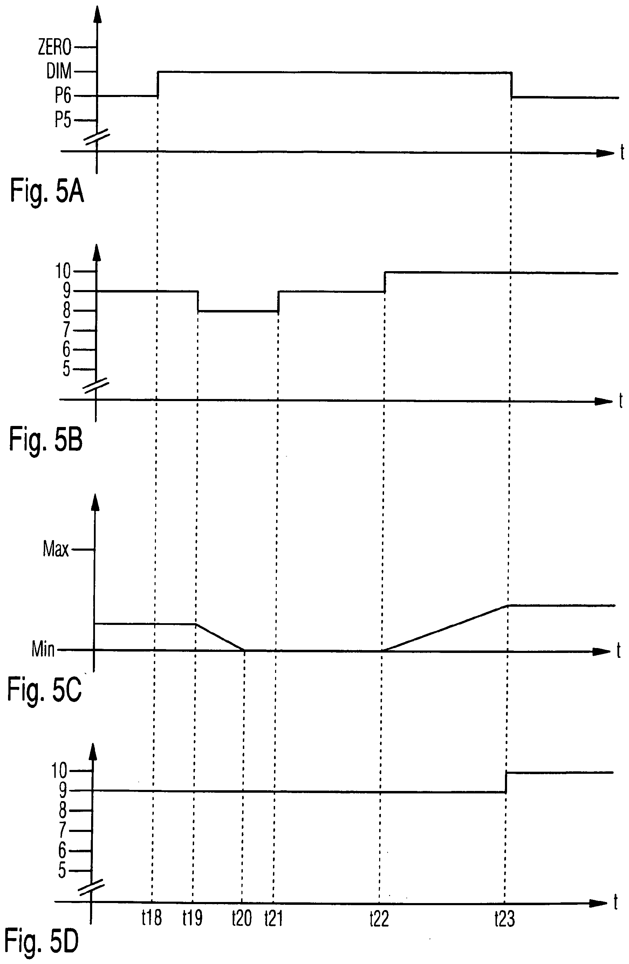

Fig. 5A bis 5D zeigen ein viertes Verlaufsdiagramm, in dem das Erreichen einer minimal einstellbaren Helligkeit der Leuchtanzeige 21 erreicht wird und das Beenden einer Änderung der Helligkeit der Leuchtanzeige 21 durch Wechsel der Drehposition des zweiten Drehknopfs 20 beschrieben wird. Zu einem Zeitpunkt t18 wird der zweite Drehknopf 20 von der Position "P6" auf die Position "DIM" verstellt. Durch eine Drehung des ersten Drehknopfs 19 von der Position 9 (Ausgangsposition) auf die Position 8 wird zu dem Zeitpunkt t19 eine Reduzierung der Helligkeit der Leuchtanzeige 21 veranlasst. Zu einem Zeitpunkt t20 erreicht die Helligkeit der Leuchtanzeige 21 ein Minimum der einstellbaren Helligkeit. Bei Erreichen des Minimums der Helligkeit wird die Änderung der Helligkeit der Leuchtanzeige 21 auch bei Verbleib des Drehknopfs 19 in seiner neuen Position 8 beendet und die Leuchtanzeige 21 leuchtet konstant mit der minimal einstellbaren Helligkeit. Zu einem Zeitpunkt t21 wird der erste Drehknopf 19 wieder in seine Ursprungsposition 9 zurückgedreht. Auch wenn die Änderung der Helligkeit der Leuchtanzeige 21 bereits beendet ist, bewirkt diese Gegenänderung keine erneute Erhöhung der Helligkeit der Leuchtanzeige 21. Dadurch wird erreicht, dass bei ordnungsgemäßem Zurückschalten des ersten Drehknopfs 19 in die Ursprungsposition eine fest eingestellte Helligkeit erzeugt und somit bei einem Wechsel in den ersten Modus keine Lautstärkenänderung durch die Änderung der Helligkeit im zweiten Modus verursacht wird.

Die Erfindung ist nicht durch das beschriebene Ausführungsbeispiel beschränkt. Vielmehr kann bei Erreichen eines Minimums eine erneute Änderung der Drehposition des ersten Drehknopfs 19 eine Änderung in entgegengesetzte Richtung der Helligkeit bewirken. Es ist ebenfalls möglich, bei Erreichen eines Minimums oder eines Maximums die Helligkeit wieder zu erhöhen bzw. zu verringern ohne die Änderung der Helligkeit zu beenden. Dadurch kann eine schwingende Helligkeit, wie sie bei Lichtdimmern üblich sind, erreicht werden.

Zu einem Zeitpunkt t22 wird der erste Drehknopf 19 von der Ausgangsposition 9 auf die Rastposition 10 geschaltet. Dadurch wird die Helligkeit der Leuchtanzeige 21 ausgehend von dem Minimum wieder erhöht. Zu einem Zeitpunkt t23 wird der zweite Drehknopf 20 von der Position "DIM" auf die Position "P6" geschaltet. Dadurch wird während einer Änderung der Helligkeit der Leuchtanzeige 21 von dem zweiten Modus zur Einstellung der Helligkeit der Leuchtanzeige 21 in den Modus zur Einstellung der Lautstärke gewechselt. Dies ist z. B. bei einer plötzlich notwendigen Verstellung des Kanals oder einer Voreinstellung des Funkgeräts 11 nötig. Dadurch wird die Helligkeitsänderung der Leuchtanzeige 21 unterbrochen, die zu dem Zeitpunkt t23 des Moduswechsels eingestellte Helligkeit beibehalten und die Lautstärke der Ausgabevorrichtung 22 des Funkgeräts 11 entsprechend der Drehposition 10, die aktuell bei dem Moduswechsel eingestellt ist, in der Audioausgabevorrichtung 22 eingestellt. Dadurch wird weiterhin gewährleistet, dass der Benutzer immer die eingestellte Lautstärke der Audioausgabevorrichtung 22 mittels der an dem ersten Drehknopf 19 eingestellten Drehposition ablesen kann. In dem ersten Modus sieht der Benutzer welche Lautstärke an der Audioausgabevorrichtung 22 des Funkgeräts 11 eingestellt ist und welche Helligkeit an der Leuchtanzeige 21 eingestellt ist. Das Funkgerät 11 kann dementsprechend zwei Parameter mit einem Knopf 19 bedienen und beide eingestellten Parameter dem Benutzer mitteilen, ohne ein anfälliges Display aufweisen zu müssen. Die Helligkeit der Leuchtanzeige 21 wird implizit durch das Leuchten der LEDs 23 bis 26 der Leuchtanzeige 21 dem Benutzer mitgeteilt. Nur während der Änderung der Helligkeit in dem zweiten Modus ist die Lautstärke der Audioausgabevorrichtung 22 nicht zwangsläufig an der Drehposition des ersten Drehknopfs 19 ablesbar.

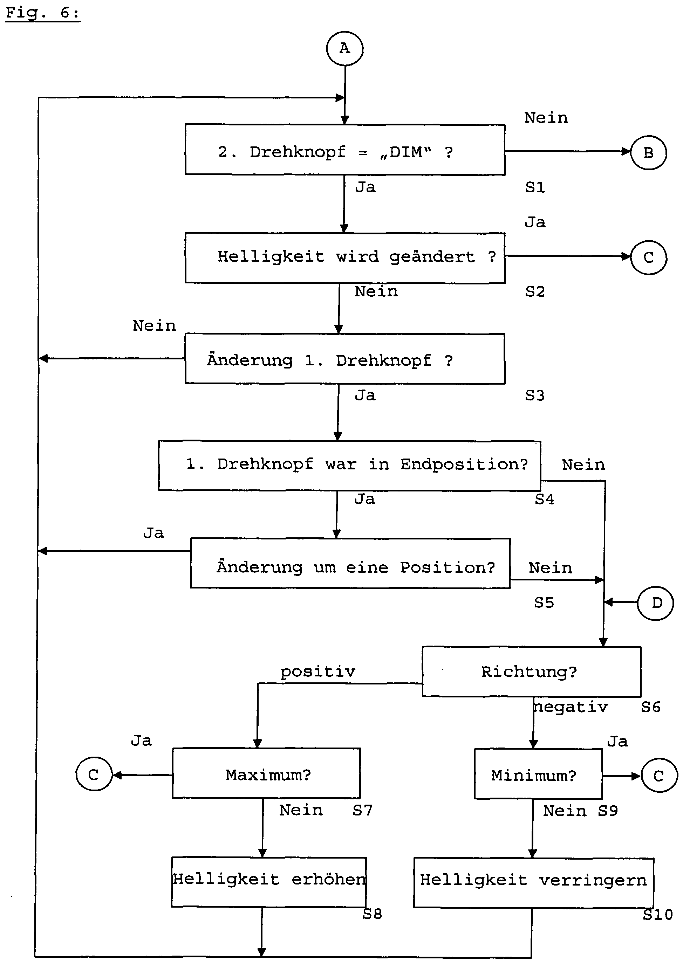

Fig. 6 bis 8 zeigen die einzelnen Verfahrensschritte zur Bedienung des Funkgeräts 11. Fig. 6 zeigt dabei die Kontrollschleife im zweiten Modus. In einem ersten Schritt S1 wird getestet ob der zweite Drehknopf 20 auf einer den zweiten Modus der Position "DIM" steht. Steht der zweite Drehknopf 20 auf der Position "DIM", d. h. wenn sich das Funkgerät 11 bzw. die Steuervorrichtung 17 in dem zweiten Modus befindet, so wird zu einem zweiten Schritt S2 übergegangen. In dem zweiten Schritt S2 wird getestet, ob die Helligkeit der Leuchtanzeige 21 gerade geändert wird. Wird die Helligkeit momentan nicht geändert, so wird zu dem dritten Schritt S3 übergegangen. In dem dritten Schritt S3 wird getestet, ob seit einem letzten Test der Position des ersten Drehknopfs 19 eine neue Drehposition des ersten Drehknopfs 19 eingestellt wurde. Wurde die Drehposition des ersten Drehknopfs 19 nicht geändert, so wird zu Schritt S1 zurückgegangen. Gab es allerdings eine Änderung der Drehposition des ersten Drehknopfs 19, so wird zu dem Schritt S4 gegangen. In dem vierten Schritt S4 wird getestet, ob der erste Drehknopf 19 sich vor der Änderung in einer Endposition befand. Befand sich der erste Drehknopf 19 in einer Endposition, so wird in dem fünften Schritt S5 getestet, ob der erste Drehknopf 19 nur um eine Position geändert wurde. Da sich der erste Drehknopf 19 in einer Endposition befand, war dabei nur eine Änderung zu der der Endposition benachbarten Drehposition möglich. Wird in dem fünften Schritt S5 eine Änderung um nur eine Drehposition festgestellt, so wird zu Schritt S1 zurückgekehrt. Sollte der erste Drehknopf 19 ausgehend von der Endposition um mehrere Drehpositionen, d. h. zwei oder mehr, in eine Richtung verdreht worden sein, so wird zu dem Schritt S6 übergegangen. Hierbei ist zu bemerken, dass die Änderung der Drehposition des ersten Drehknopfs 19 in zwei verschiedene Richtungen immer als zwei unterschiedliche Änderungen betrachtet werden.

Wird in Schritt S4 allerdings festgestellt, dass der erste Drehknopf 19 sich nicht in einer Endposition befand, wird direkt zu dem Schritt S6 übergegangen. In dem Schritt S6 wird getestet, in welche Richtung der erste Drehknopf 19 gedreht wurde. Wurde der erste Drehknopf 19 aus seiner Ausgangsposition in eine positive Richtung, d. h. im Uhrzeigersinn oder hin zu größeren Werten der Lautstärke gedreht, so wird zu Schritt S7 übergegangen. In Schritt S7 wird getestet, ob der Wert der Helligkeit der Leuchtanzeige 21 bereits einer maximal einstellbaren Helligkeit der Leuchtanzeige 21 entspricht. Entspricht der Wert der Helligkeit der Leuchtanzeige 21 einem maximalen Wert, so wird zu dem später beschriebenen Schritt S11 oder alternativ zu S12 übergegangen. Ist eine geringere Helligkeit als die maximal einstellbare an der Leuchtanzeige 21 eingestellt, so wird in Schritt S8 eine Erhöhung der Helligkeit durchgeführt. Daraufhin wird die Kontrollschleife zur Bedienung des Funkgeräts 11 beginnend mit Schritt S1 wiederholt.

Entsprechend wird in Schritt S6 bei Feststellen einer negativen Drehrichtung des ersten Drehknopfs 19 in dem Schritt S9 getestet ob ein minimal einstellbarer Helligkeitswert an der Leuchtanzeige 21 eingestellt ist. Wird ein minimaler Helligkeitswert festgestellt, wird ebenfalls zu Schritt S11 oder Schritt S12 gegangen, andernfalls wird in Schritt S10 eine Verringerung der Helligkeit durchgeführt. Daraufhin wird ebenfalls wieder zu Schritt S1 zurückgekehrt.

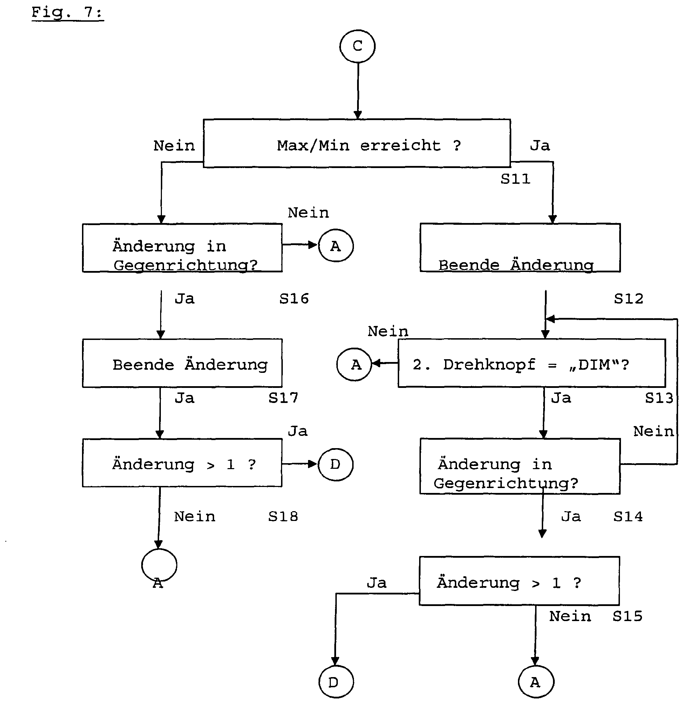

Wird in Schritt S2 festgestellt, dass die Helligkeit aktuell geändert wird, so wird zu dem in Fig. 7 dargestellten Schritt S11 gegangen. In dem Schritt S11 wird getestet, ob die Helligkeit der Leuchtanzeige 21 einem maximalen bzw. einem minimal einstellbaren Helligkeitswert der Leuchtanzeige 21 entspricht. Ist die Helligkeit der Leuchtanzeige 21 minimal oder maximal, so wird zu dem Schritt S12 übergegangen und die Änderungen der Helligkeit beendet. Daraufhin wird in dem Schritt S13 getestet, ob der zweite Drehknopf 20 weiterhin auf der Position "DIM" steht. Wird in Schritt S14 festgestellt, dass der zweite Drehknopf 20 nicht mehr auf "DIM" steht, wird zu Schritt 1 zurückgegangen. Andernfalls wird in Schritt S14 getestet, ob der erste Drehknopf 19 in eine zu der vorangehenden Änderung entgegengesetzten Richtung gedreht wird. Wird in dem Schritt S14 keine Änderung in Gegenrichtung gefunden, so wird zu dem Schritt S13 zurückgekehrt. Anderenfalls wird in dem Schritt S15 getestet, ob die Änderung in Gegenrichtung mehr als eine Rastposition umfasste. Sollte der erste Drehknopf 19 nur um eine Rastposition zurückgedreht worden sein, so wird zu dem Schritt S1 zurückgekehrt. Andernfalls wird zu Schritt S6 übergegangen.

Sollte in dem Schritt S11 kein minimal oder maximal einstellbarer Helligkeitswert der Leuchtanzeige 21 festgestellt werden, so wird in Schritt S10 getestet, ob der ersten Drehknopf 19 seit der letzten Änderung der Drehposition, d.h. seit dem Beginn der Änderung der Helligkeit, in eine Gegenrichtung gedreht wurde. Sollte dies nicht der Fall sein, so wird zu dem Schritt S1 zurückgegangen. Andernfalls wird in dem Schritt S17 die Änderung der Helligkeit der Leuchtanzeige 21 beendet. Daraufhin wird in Schritt S18 getestet, ob die Änderung in Gegenrichtung mehr als eine Drehposition umfasste. Sollte dies nicht der Fall sein, so wird zu Schritt S1 zurückgekehrt. Andernfalls wird in Schritt S6 wieder die Richtung der Änderung getestet.

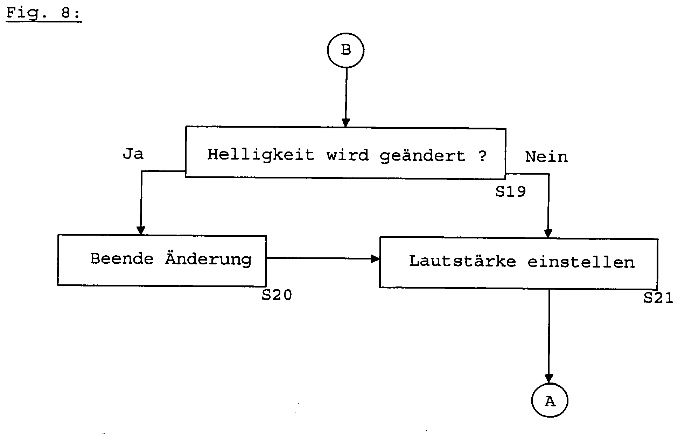

Sollte in dem Schritt S1 festgestellt werden, dass sich der zweite Drehknopf 20 nicht in der Position "DIM" befindet, so wird zu dem in Fig. 8 gezeigten Schritt S19 übergegangen. In dem Schritt S19 wird getestet ob die Helligkeit geändert wird. Sollte dies der Fall sein, so wird in Schritt S20 die Änderung der Helligkeit der Leuchtanzeige 21 geändert und zu Schritt S21 gegangen. Wird in dem Schritt S19 festgestellt, dass die Helligkeit nicht geändert wird, so wird im Schritt S21 die Lautstärke der Audioausgabevorrichtung 22 des Funkgeräts 11 entsprechend der Position des ersten Drehknopfs 19 eingestellt. Daraufhin wird wieder zu dem Schritt S1 zurückgegangen.

Die Erfindung ist nicht auf das beschriebene Ausführungsbeispiel beschränkt. Vielmehr sind alle hier beschriebenen Ausführungsformen oder einzelne Aspekte hiervon der Erfindung miteinander kombinierbar.

## Patentansprüche

1. Kommunikationsvorrichtung zur drahtlosen Kommunikation, aufweisend eine Bedienvorrichtung (18) mit wenigstens einem Bedienelement (19) und eine Steuervorrichtung (17) zur Steuerung der Kommunikationsvorrichtung auf der Basis einer Eingabe über die Bedienvorrichtung (18), wobei das Bedienelement (19) in einem ersten Modus zur Eingabe einer ersten Größe zur Einstellung eines ersten Parameters der Kommunikationsvorrichtung und in einem zweiten Modus zur Eingabe einer zweiten Größe zur Einstellung eines zweiten Parameters der Kommunikationsvorrichtung geeignet ist, wobei die Steuervorrichtung (17) so eingerichtet ist, dass in dem ersten Modus jeder Position einer Mehrzahl von einstellbaren Positionen des Bedienelements genau ein fester Wert des ersten Parameters zugeordnet ist, und wobei die Steuervorrichtung (17) so eingerichtet ist, dass in dem zweiten Modus eine Änderung der Position des Bedienelements (19) eine Änderung des Werts des zweiten Parameters bewirkt und die Änderung des Werts des zweiten Parameters durch eine in ihrer Größe festgelegten Änderung der Position des Bedienelements (19) in eine Gegenrichtung der vorangegangenen Positionsänderung oder durch einen Wechsel in den ersten Modus beendet wird,
**dadurch gekennzeichnet,**
**dass** die Steuervorrichtung (17) so eingerichtet ist, dass in dem zweiten Modus der Wert nach der Änderung der Position des Bedienelements (19) streng monoton bis zu höchstens einem Maximalwert erhöht oder streng monoton bis zu höchstens einem Minimalwert verringert wird bis die Änderung des Werts des zweiten Parameters beendet wird.

2. Kommunikationsvorrichtung nach Anspruch 1,
**dadurch gekennzeichnet,**
**dass** die Steuervorrichtung (17) so eingerichtet ist, dass in dem zweiten Modus die Änderung der Position des Bedienelements (19) in eine Richtung, welche in dem ersten Modus den Wert des ersten Parameters erhöht, eine Erhöhung des Werts des zweiten Parameters bewirkt und/oder dass in dem zweiten Modus die Änderung der Position des Bedienelements (19) in eine Richtung, welche in dem ersten Modus den Wert des eingegebenen ersten Parameters verringert, eine Verringerung des Werts des zweiten Parameters bewirkt.

3. Kommunikationsvorrichtung nach Anspruch 1 oder 2,
**dadurch gekennzeichnet,**
**dass** die Steuervorrichtung (17) so eingerichtet ist, dass sich in dem zweiten Modus die Änderung des Werts des zweiten Parameters linear mit der Zeit verhält.

4. Kommunikationsvorrichtung nach einem der Ansprüche 1 bis 3,
**dadurch gekennzeichnet,**
**dass** das Bedienelement (19) eine Mehrzahl von Rastpositionen aufweist und jede Rastposition genau einer der einstellbaren Positionen entspricht.

5. Kommunikationsvorrichtung nach Anspruch 4,
**dadurch gekennzeichnet,**
**dass** das Bedienelement (19) wenigstens eine Endposition aufweist und die Steuervorrichtung (17) so eingerichtet ist, dass, in dem zweiten Modus und wenn sich das Bedienelement(19) in der wenigstens einen Endposition befindet, eine Änderung der Position des Bedienelements (19) zu der der Endposition benachbarten Rastposition keine Änderung des Werts des zweiten Parameters bewirkt und erst eine darauffolgende weitere Änderung der Position des Bedienelements (19) eine Änderung des Werts des zweiten Parameters bewirkt.

6. Kommunikationsvorrichtung nach einem der Ansprüche 1 bis 5,
**dadurch gekennzeichnet,**
**dass** jede einstellbare Position des Bedienelements (19) von den restlichen einstellbaren Positionen visuell unterscheidbar ist.

7. Kommunikationsvorrichtung nach einem der Ansprüche 1 bis 6,
**dadurch gekennzeichnet,**
**dass** die Kommunikationsvorrichtung (11) eine Audioausgabevorrichtung (22) verbunden mit der Steuervorrichtung (17) aufweist und der erste Parameter zur Einstellung der Lautstärke der akustischen Ausgabe der Audioausgabevorrichtung (22) vorgesehen ist und/oder dass die Bedienvorrichtung (18) eine Leuchtanzeige (21) aufweist und der zweite Parameter zur Einstellung der Helligkeit der Leuchtanzeige (21) entspricht.

8. Kommunikationsvorrichtung nach einem der Ansprüche 1 bis 7,
**dadurch gekennzeichnet,**
**dass** die Bedienvorrichtung (18) ein weiteres Bedienelement (20) aufweist, welches in einer festgelegten Position die Bedienvorrichtung (18) in den zweiten Modus schaltet.

9. Verfahren zur Bedienung einer zur drahtlosen Kommunikation geeigneten Kommunikationsvorrichtung mit einer wenigstens ein Bedienelement (19) aufweisenden Bedienvorrichtung (18), das Verfahren die folgenden Schritte aufweisend:
- Einlesen einer Position des Bedienelements (19);
- Einstellen eines Werts eines ersten Parameters der Kommunikationsvorrichtung auf Basis der eingelesenen Position in einem ersten Modus und Einstellen eines Werts eines zweiten Parameters der Kommunikationsvorrichtung auf Basis der eingelesenen Position in einem zweiten Modus; wobei in dem ersten Modus jeder Position einer Mehrzahl von einstellbaren Positionen des Bedienelements (19) genau ein fester Wert des ersten Parameters zugeordnet wird (S21),
**dadurch gekennzeichnet,**
**dass** der Wert des zweiten Parameters nach der Änderung der Position bis zum Ende der Änderung des Werts des zweiten Parameters streng monoton bis zu höchstens einem Maximalwert erhöht oder bis zu höchstens einem Minimalwert verringert wird (S11, S12).

10. Verfahren nach Anspruch 9,
**dadurch gekennzeichnet,**
**dass** in dem zweiten Modus eine Änderung der Position des Bedienelements (19) (S3) eine Änderung des Werts des zweiten Parameters bewirkt (S8, S10) und die Änderung durch eine in ihrer Größe festgelegte Änderung der Position des Bedienelements (19) in eine Gegenrichtung der vorigen Positionsänderung (S16) oder durch einen Wechsel in den ersten Modus beendet wird.

11. Verfahren nach Anspruch 9 oder 10,
**dadurch gekennzeichnet,**
**dass** das Bedienelement (19) für jede einstellbare Position genau eine Raststellung aufweist und zumindest eine Endposition aufweist und, in dem zweiten Modus (S1) und wenn sich das Bedienelement (19) in seiner Endposition befindet (S4), eine Änderung der Position des Bedienelements (19) zu der die Endposition benachbarten Rastposition (S5) keine Änderung des Werts des zweiten Parameters bewirkt und eine darauffolgende Änderung der Position des Bedienelements (19) (S3) eine Änderung des Werts des zweiten Parameters bewirkt.

## Claims

1. Communication apparatus for wireless communication, having an operator control apparatus (18), with at least one operator control element (19), and a control apparatus (17) for controlling the communication apparatus on the basis of an input by means of the operator control apparatus (18), wherein the operator control element (19) is suitable, in a first mode, for inputting a first variable for adjusting a first parameter of the communication apparatus and, in a second mode, for inputting a second variable for adjusting a second parameter of the communication apparatus,
wherein the control apparatus (17) is set up such that in the first mode each position from a plurality of adjustable positions of the operator control element has precisely one associated fixed value of the first parameter, and
wherein the control apparatus (17) is set up such that in the second mode a change of the position of the operator control element (19) causes a change of the value of the second parameter, and the change of the value of the second parameter is terminated by a change, the size of which is stipulated, of the position of the operator control element (19) in an opposite direction to the preceding change of position or by a change to the first mode,
**characterized**
**in that** the control apparatus (17) is set up such that in the second mode the value after the change of the position of the operator control element (19) is increased with rigorous monotony to no more than a maximum value or decreased with rigorous monotony to no more than a minimum value until the change of the value of the second parameter is terminated.

2. Communication apparatus according to Claim 1,
**characterized**
**in that** the control apparatus (17) is set up such that in the second mode the change of the position of the operator control element (19) in a direction that, in the first mode, increases the value of the first parameter causes an increase in the value of the second parameter and/or in the second mode the change of the position of the operator control element (19) in a direction that, in the first mode, decreases the value of the input first parameter causes a decrease in the value of the second parameter.

3. Communication apparatus according to Claim 1 or 2,
**characterized**
**in that** the control apparatus (17) is set up such that in the second mode the change of the value of the second parameter behaves linearly over time.

4. Communication apparatus according to one of Claims 1 to 3,
**characterized**
**in that** the operator control element (19) has a plurality of latching positions and each latching position corresponds to precisely one of the adjustable positions.

5. Communication apparatus according to Claim 4,
**characterized**
**in that** the operator control element (19) has at least one terminal position and the control apparatus (17) is set up such that in the second mode, and when the operator control element (19) is in the at least one terminal position, a change of the position of the operator control element (19) to the latching position adjacent to the terminal position does not cause a change of the value of the second parameter and only a subsequent further change of the position of the operator control element (19) causes a change of the value of the second parameter.

6. Communication apparatus according to one of Claims 1 to 5
**characterized**
**in that** each adjustable position of the operator control element (19) is visually distinguishable from the remaining adjustable positions.

7. Communication apparatus according to one of Claims 1 to 6
**characterized**
**in that** communication apparatus (11) has an audio output apparatus (22) connected to the control apparatus (17), and the first parameter is provided for adjusting the volume of the audible output of the audio output apparatus (22) and/or in that the operator control apparatus (18) has a luminous display (21) and the second parameter corresponds to the adjustment of the brightness of the luminous display (21).

8. Communication apparatus according to one of Claims 1 to 7
**characterized**
**in that** the operator control apparatus (18) has a further operator control element (20) that, in a stipulated position, switches the operator control apparatus (18) to the second mode.

9. Method for using a communication apparatus that is suitable for wireless communication and has an operator control apparatus (18) having at least one operator control element (19), the method having the following steps:
- a position of the operator control element (19) is read in;
- a value of a first parameter of the communication apparatus is adjusted on the basis of the read-in position in a first mode and a value of a second parameter of the communication apparatus is adjusted on the basis of the read-in position in a second mode; wherein in the first mode each position from a plurality of adjustable positions of the operator control element (19) is assigned precisely one fixed value of the first parameter (S21),
**characterized**
**in that** the value of the second parameter after the change of position is increased with rigorous monotony to no more than a maximum value or decreased to no more than a minimum value until the end of the change of the value of the second parameter (S11, S12).

10. Method according to Claim 9,
**characterized**
**in that** in the second mode a change of the position of the operator control element (19) (S3) causes a change of the value of the second parameter (S8, S10) and the change is terminated by a change, the magnitude of which is stipulated, of the position of the operator control element (19) in an opposite direction to the previous change of position (S16) or by a change to the first mode.

11. Method according to Claim 9 or 10,
**characterized**
**in that** the operator control element (19) has precisely one latching position for each adjustable position and has at least one terminal position and, in the second mode (S1), and when the operator control element (19) is in its terminal position (S4), a change in the position of the operator control element (19) to the latching position (S5) adjacent to the terminal position does not cause a change of the value of the second parameter and a subsequent change of the position of the operator control element (19) (S3) causes a change of the value of the second parameter.

## Revendications

1. Dispositif de communication pour la communication sans fil, comprenant un dispositif de manoeuvre (18) pourvu d'au moins un élément de manoeuvre (19) et un dispositif de commande (17) pour la commande du dispositif de communication sur la base d'une entrée par l'intermédiaire du dispositif de manoeuvre (18), dans lequel l'élément de manoeuvre (19) est adapté, dans un premier mode, à entrer une première grandeur pour le réglage d'un premier paramètre du dispositif de communication et, dans un deuxième mode, à entrer une deuxième grandeur pour le réglage d'un deuxième paramètre du dispositif de communication,
dans lequel le dispositif de commande (17) est configuré de telle sorte que, dans le premier mode, une seule valeur fixe du premier paramètre est associée à chaque position d'une pluralité de positions réglables de l'élément de manoeuvre, et
dans lequel le dispositif de commande (17) est configuré de telle sorte que, dans le deuxième mode, une modification de la position de l'élément de manoeuvre (19) entraîne une modification de la valeur du deuxième paramètre et on met fin à la modification de la valeur du deuxième paramètre par une modification de la position de l'élément de manoeuvre (19), dont la grandeur a été établie, en sens inverse de la modification de position précédente ou par un passage dans le premier mode,
**caractérisé**
**en ce que** le dispositif de commande (17) est configuré de telle sorte que, dans le deuxième mode, après la modification de la position de l'élément de manoeuvre (19), la valeur est augmentée de manière strictement monotone sans dépasser une valeur maximale ou est réduite de manière strictement monotone sans dépasser une valeur minimale jusqu'à ce que la modification de la valeur du deuxième paramètre soit terminée.

2. Dispositif de communication selon la revendication 1,
**caractérisé**
**en ce que** le dispositif de commande (17) est configuré de telle sorte que, dans le deuxième mode, la modification de la position de l'élément de manoeuvre (19) dans une direction, laquelle augmente dans le premier mode la valeur du premier paramètre, entraîne une augmentation de la valeur du deuxième paramètre et/ou **en ce que** dans le deuxième mode, la modification de la position de l'élément de manoeuvre (19) dans une direction, laquelle diminue dans le premier mode la valeur du premier paramètre entré, entraîne une diminution de la valeur du deuxième paramètre.

3. Dispositif de communication selon la revendication 1 ou 2,
**caractérisé**
**en ce que** le dispositif de commande (17) est configuré de telle sorte que, dans le deuxième mode, la modification de la valeur du deuxième paramètre se comporte de manière linéaire avec le temps.

4. Dispositif de communication selon l'une quelconque des revendications 1 à 3,
**caractérisé**
**en ce que** l'élément de manoeuvre (19) comprend une pluralité de positions d'encliquetage et chaque position d'encliquetage correspond à une seule des positions réglables.

5. Dispositif de communication selon la revendication 4,
**caractérisé**
**en ce que** l'élément de manoeuvre (19) comprend au moins une position finale et le dispositif de commande (17) est configuré de telle sorte que, dans le deuxième mode et lorsque l'élément de manoeuvre (19) se situe dans ladite au moins une position finale, une modification de la position de l'élément de manoeuvre (19) par rapport à la position d'encliquetage voisine de la position finale n'entraîne pas de modification de la valeur du deuxième paramètre et ce n'est qu'une autre modification suivante de la position de l'élément de manoeuvre (19) qui entraîne une modification de la valeur du deuxième paramètre.

6. Dispositif de communication selon l'une quelconque des revendications 1 à 5,
**caractérisé**
**en ce que** chaque position réglable de l'élément de manoeuvre (19) peut être différenciée visuellement des positions réglables restantes.

7. Dispositif de communication selon l'une quelconque des revendications 1 à 6,
**caractérisé**
**en ce que** le dispositif de communication (11) comprend un dispositif d'émission audio (22) relié au dispositif de commande (17) et le premier paramètre est destiné à régler l'intensité sonore de l'émission acoustique du dispositif d'émission audio (22) et/ou **en ce que** le dispositif de manoeuvre (18) comprend un affichage lumineux (21) et le deuxième paramètre correspond au réglage de la luminosité de l'affichage lumineux (21).

8. Dispositif de communication selon l'une quelconque des revendications 1 à 7,
**caractérisé**
**en ce que** le dispositif de manoeuvre (18) comprend un autre élément de manoeuvre (20), lequel, dans une position établie, fait passer le dispositif de manoeuvre (18) dans le deuxième mode.

9. Procédé de manoeuvre d'un dispositif de communication adapté à la communication sans fil au moyen d'un dispositif de manoeuvre (18) comprenant au moins un élément de manoeuvre (19), le procédé comprenant les étapes suivantes :
- la lecture d'une position de l'élément de manoeuvre (19) ;
- le réglage d'une valeur d'un premier paramètre du dispositif de communication sur la base de la position lue dans un premier mode et le réglage d'une valeur d'un deuxième paramètre du dispositif de communication sur la base de la position lue dans un deuxième mode ;
dans lequel, dans le premier mode, une seule valeur fixe du premier paramètre est associée à chaque position d'une pluralité de positions réglables de l'élément de manoeuvre (19) (S21),
**caractérisé**
**en ce que** la valeur du deuxième paramètre, après la modification de la position jusqu'à la fin de la modification de la valeur du deuxième paramètre, est augmentée de manière strictement monotone sans dépasser une valeur maximale ou diminuée sans dépasser une valeur minimale (S11, S12).

10. Procédé selon la revendication 9,
**caractérisé**
**en ce que** dans le deuxième mode, une modification de la position de l'élément de manoeuvre (19) (S3) entraîne une modification de la valeur du deuxième paramètre (S8, S10) et on met fin à la modification par une modification, dont la grandeur est établie, de la position de l'élément de manoeuvre (19) en sens inverse de la modification de position précédente (S16) ou par un passage dans le premier mode.

11. Procédé selon la revendication 9 ou 10,
**caractérisé**
**en ce que** l'élément de manoeuvre (19), pour chaque position réglable, présente une seule position d'encliquetage et au moins une position finale et, dans le deuxième mode (S1) et lorsque l'élément de manoeuvre (19) se situe dans sa position finale (S4), une modification de la position de l'élément de manoeuvre (19) par rapport à la position d'encliquetage (S5) voisine de la position finale n'entraîne pas de modification de la valeur du deuxième paramètre et une modification suivante de la position de l'élément de manoeuvre (19) (S3) entraîne une modification de la valeur du deuxième paramètre.
